(19) Europäisches Patentamt
European Patent Office
Office européen des brevets

(11) EP 0 717 372 B1

(12) **FASCICULE DE BREVET EUROPEEN**

(45) Date de publication et mention de la délivrance du brevet:
**25.07.2001 Bulletin 2001/30**

(51) Int Cl.[7]: **G06T 7/20**, H04N 7/36, H04N 5/14

(21) Numéro de dépôt: **95402511.0**

(22) Date de dépôt: **09.11.1995**

(54) **Procédé de sélection de vecteurs de mouvement et dispositif de traitement d'images mettant en oeuvre ledit procédé**

Verfahren zum Auswählen von Bewegungsvektoren und Bildverarbeitungsvorrichtung zur Durchführung des Verfahrens

Motion vector selection process and image processing device carrying out said process

(84) Etats contractants désignés:
**DE FR GB IT**

(30) Priorité: **13.12.1994 FR 9415010**

(43) Date de publication de la demande:
**19.06.1996 Bulletin 1996/25**

(73) Titulaire: **THOMSON multimedia**
**92648 Boulogne Cédex (FR)**

(72) Inventeurs:
- **Pirson, Alain, THOMSON Multimedia F-92050 Paris La Défense (FR)**
- **Charlot, Didier, THOMSON Multimedia F-92050 Paris La Défense (FR)**

(74) Mandataire: **Zhang, Jianguo et al**
**THOMSON multimedia,**
**46 quai A. Le Gallo**
**92648 Boulogne Cédex (FR)**

(56) Documents cités:
**DE-A- 4 226 128** **US-A- 5 327 232**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 717 372 B1

## Description

La présente invention concerne un procédé de sélection de vecteurs mouvement et un dispositif mettant en oeuvre ce procédé. Le procédé ou dispositif conforme à l'invention est utilisé notamment dans des encodeurs d'images de télévision utilisant un procédé de compensation de mouvement.

Un certain nombre de systèmes de compression d'images sont basés sur un traitement par blocs de pixels. Dans le cas de MPEG2 (pour "Motion Picture Expert Group"), les images sont divisées en blocs de $8^*8$ pixels, quatre blocs étant rassemblés en un macrobloc de $16^*16$ pixels. Les blocs ou les macroblocs subissent divers traitements pour la réduction de la redondance entre images et à l'intérieur d'une même image. Un des traitements utilisés est l'estimation de mouvement. Ce procédé consiste à estimer le déplacement d'une partie de l'image courante par rapport à des images précédentes ou futures. On détermine ainsi un ou plusieurs vecteurs mouvement qui définissent le déplacement. Ces vecteurs mouvement permettent d'obtenir, à partir des images précédentes ou futures, une prédiction de l'image courante. On détermine alors la différence entre cette prédiction et l'image courante, et c'est cette différence qui est utilisée pour la suite de la compression. Actuellement, des vecteurs mouvement sont utilisés pour des images dites "inter" et "bi-directionnelles", mais peuvent l'être également pour des images dites "intra", dans le but de réduire les effets d'éventuelles erreurs de transmission.

L'estimation de mouvement est généralement effectuée pour chaque macrobloc. En lieu et place d'une image précédente, on peut également utiliser une image de référence stockée dans l'encodeur, cette image correspondant à l'image décodée par un décodeur (c'est à dire une image tenant compte des pertes d'information dues à la compression).

Une technique pour déterminer le "meilleur" macrobloc dans l'image de référence consiste à comparer le macrobloc courant à chaque macrobloc de l'image de référence. En tant que critère de comparaison, on définit une fonction d'erreur Err, calculée pour chaque position possible du macrobloc dans l'image de référence. La position donnant la plus faible valeur pour la fonction Err déterminera le vecteur déplacement. Ce dernier peut avoir diverses précisions, suivant la capacité de calcul disponible et la bande passante réservée au codage des vecteurs mouvement. Une précision d'une fraction de pixel peut être implémentée par interpolation inter-pixel. Si les vecteurs mouvement sont limités en longueur, une fenêtre de recherche de taille appropriée est placée autour de la position définie par le macrobloc courant.

Le calcul des vecteurs mouvement exige de grandes capacités de calcul, qui augmentent avec la précision désirée, la résolution de l'image, leur fréquence etc...

Une fonction d'erreur classiquement utilisée est:

$$Err(m,n) = \sum_i \sum_j D(a(i,j), b(i+m, j+n))$$

où i et j désignent des positions à l'intérieur d'un macrobloc, où m et n désignent les coordonnées d'un vecteur mouvement et où a et b désignent respectivement des valeurs de luminance de pixels du macrobloc courant et du macrobloc déplacé de la fenêtre ou image de recherche.

La fonction D peut être par exemple $D(x,y) = |x-y|$.

Or, plusieurs vecteurs mouvement peuvent correspondre à une même valeur minimale de la fonction d'erreur. Un problème proche est notamment abordé dans le brevet américain US-A-5 327 232, mais la solution proposée est complexe.

L'invention a pour objet un procédé et un dispositif de sélection de vecteurs mouvement dans un système de traitement d'images comme décrits dans les revendications 1 et 6 respectivement.

Selon un mode de réalisation particulier, le calcul de la norme desdits vecteurs est effectué selon la fonction:

$$\|(X,Y)\| = \max\{|X|,|Y|\} \qquad (2)$$

où X et Y représentent les coordonnées d'un vecteur.

Selon un mode de réalisation particulier, notamment les coordonnées des vecteurs étant codées en complément à deux, une valeur absolue modifiée d'une des coordonnées est obtenue en inversant les bits de la coordonnée lorsque ladite coordonnée est négative.

Selon un mode de réalisation particulier, la fenêtre de référence est balayée de façon à ce que les coordonnées des vecteurs mouvement soient des fonctions croissantes, et que lorsque plusieurs vecteurs correspondent à ladite plus petite valeur de la fonction d'évaluation, le dernier vecteur dans l'ordre de balayage est choisi.

Selon un mode de réalisation particulier, la fonction d'évaluation est de la forme:

$$Err(m,n) = \sum_i \sum_j D(a(i,j), b(i+m, j+n))$$

avec D(x,y) = |x-y| ou D(x,y)= $\sqrt{(x^2 + y^2)}$.

Selon un mode de réalisation particulier, ladite fonction d'évaluation est une fonction de la distortion existant entre le bloc courant et le bloc de la fenêtre de référence.

Selon un mode de réalisation particulier, les moyens de calcul de la norme d'un vecteur comportent des portes logiques effectuant un ou exclusif entre chaque composante du vecteur et son bit de signe.

Selon un mode de réalisation particulier, les moyens de calcul comportent d'autre part un comparateur et un multiplexeur dont la fonction est déterminer la plus petite valeur des composantes à la sortie du ou exclusif.

Pour plus d'informations sur l'utilisation de vecteurs mouvement dans la compression d'images aux normes MPEG, on se reportera à:

"Information technology, Generic coding of moving pictures and associated audio, Recommendation H.262 ISO/ IEC 13818-2 (Video) Committee Draft of November 1993."

D'autres caractéristiques et avantages de l'invention apparaîtront à travers la description d'un exemple de réalisation particulier non limitatif illustré par les figures jointes, parmi lesquelles:

- la figure 1 représente un diagramme fonctionnel d'un processeur d'estimation de mouvement,
- les figures 2a et 2b représentent schématiquement un exemple d'une stratégie de comparaison employée,
- la figure 3 représente un diagramme fonctionnel d'un réseau systolique utilisé pour le calcul des vecteurs mouvement,
- la figure 4 représente un diagramme fonctionnel d'une cellule dite "S" du réseau systolique de la figure 3,
- la figure 5 représente un diagramme fonctionnel d'un réseau systolique simplifié permettant l'illustration du fonctionnement en mode non-entrelacé,
- la figure 6 représente un diagramme fonctionnel d'un réseau systolique simplifié permettant l'illustration du fonctionnement en mode entrelacé,
- la figure 7 représente un diagramme fonctionnel du coprocesseur suivant une première variante,
- la figure 8 représente un diagramme fonctionnel du coprocesseur suivant une seconde variante,
- la figure 9a est un schéma illustrant la façon dont le bloc courant est comparé aux blocs de la fenêtre de recherche suivant un exemple de réalisation de l'invention,
- la figure 9b illustre les conventions prises pour les coordonnées d'un vecteur mouvement suivant le présent exemple de réalisation,
- la figure 10 est un diagramme fonctionnel d'une cellule de sélection de vecteur mouvement conforme au présent exemple de réalisation de l'invention,
- la figure 11 représente le schéma logique du moyen de calcul de valeur absolue conforme au présent exemple de réalisation.

Dans un premier temps, on décrira un exemple d'un dispositif de sélection de vecteurs de mouvement selon l'invention. On insistera plus particulièrement sur la description du co-processeur qui est l'élément qui effectue le calcul de l'erreur associée à chaque vecteur mouvement.

Le processeur d'estimation de mouvement permet de calculer différents types de vecteurs mouvement, suivant les exigences du standard MPEG2: vecteurs pour trames ou images, vecteurs d'une image précédente vers l'image courante ou d'une image future vers l'image courante (respectivement "forward vectors" et "backward vectors" en terminologie anglo-saxonne).... Par la suite, pour la clarté des explications, exemple sera pris sur des vecteurs d'une image précédente vers l'image courante. Bien entendu, l'invention n'est pas limitée à l'exemple de réalisation présenté.

La figure 1 illustre de manière fonctionnellle un processeur d'estimation de mouvement 101. Le processeur 101 comprend un contrôleur RISC 102 (RISC signifiant:" Reduced Instruction Set Computer"), un coprocesseur à réseaux systoliques 103, trois ports d'entrée indépendants 104, 105, 106 pour charger les images, un port de sortie 107 pour fournir les vecteurs mouvement, ainsi qu'une RAM et une ROM locales (référencées respectivement par 108 et 109).

La présence de plusieurs ports d'entrée indépendants permet de travailler sur autant de source vidéo indépendantes. Selon une variante de réalisation, chaque port d'entrée est muni d'un circuit de sous-échantillonnage pour la mise en oeuvre d'une estimation de mouvement hierarchisée.

Les différents sous-ensembles mentionnés communiquent à travers un bus de données 111 qui est entre autres connecté à une mémoire externe DRAM 110. Une unité de gestion de mémoire 112 règle la circulation des données entre les mémoires locales. Les données correspondant aux images (de référence ou courantes) sont acheminées vers la mémoire dynamique 110. Elles sont ensuite relues pour être soumises en temps utile au coprocesseur 103. Les vecteurs mouvement calculés par le coprocesseur 103 sont renvoyés vers la mémoire dynamique 110 à travers une mémoire tampon MV BUFF 114. Au moment opportun, ces vecteurs sont relus et transmis par l'intermédiaire du port de sortie 107.

Le processeur 101 est également muni d'une interface microprocesseur 115 destinée à la programmation et à la configuration du contrôleur RISC 102, par téléchargement de code et de paramètres de calcul. Les vecteurs mouvement stockés dans la mémoire dynamique 110 sont également accessibles à travers l'interface 115.

Une unité MAX-AVR 113 calcule le vecteur mouvement moyen et le vecteur mouvement maximal pour chaque image.

Le contrôleur RISC 102 est, selon le présent exemple, un processeur à 19 bits comportant 62 registres et une mémoire de données de 64 mots. Le contrôleur 102 a pour rôle de gérer les requêtes des différentes unités du processeur 101 et de les activer en temps utile.

Le contrôleur RISC 102 est connecté à la RAM locale 108 et à la ROM locale 109, cette dernière contenant des routines couramment utilisées.

Le co-processeur 103 comporte plusieurs réseaux systoliques travaillant en parallèle ou en série, suivant la configuration programmée. Par la suite, nous décrirons tout d'abord le fonctionnement d'un réseau systolique unique. Ceci permettra de mieux comprendre le fonctionnement du coprocesseur 103 qui, selon le présent exemple, associe 8 de ces réseaux.

La figure 2a illustre la circulation de l'information dans le réseau systolique. La fonction de base du réseau est de comparer un bloc de pixels courant au contenu d'une fenêtre de référence. Le bloc courant est stocké dans le réseau systolique 201. La fenêtre de référence est acheminée par bandes vers le réseau. Pour chaque position possible, la fonction d'erreur Err est calculée.

A partir des différentes valeurs de la fonction d'erreur pour un même bloc courant, mais des blocs différents extraits de la fenêtre de recherche, un élément 202 détermine le vecteur le plus approprié. Cet élément sera décrit plus en détail ultérieurement.

La figure 2b illustre la méthode de détermination des bandes à fournir au réseau systolique. Chaque bande a un nombre de lignes de pixels qui correspond au nombre de lignes du réseau (4 suivant le présent exemple). La première bande contient les quatre premières lignes de la fenêtre de référence. Lorsque la première bande a été totalement traitée, le traitement est poursuivi avec la bande suivante, qui contient les trois dernières lignes de la première bande, ainsi que la ligne immédiatement consécutive à cette première bande. Chaque bande est donc décalée d'une ligne par rapport à la bande précédente.

Chaque bande est fournie au réseau systolique colonne par colonne. Le bloc courant, ayant le même nombre de lignes que chaque bande, est ainsi comparé à tous les blocs de même taille de chaque bande. Finalement, le bloc courant aura été comparé à tous les blocs de même taille de la fenêtre de référence. Autant de valeurs de la fonction d'erreur auront été calculées et transmises à l'élément 202.

On notera que deux bandes consécutives diffèrent seulement d'une ligne de pixels. Cette redondance sera mise à profit plus loin pour limiter le chargement des données à partir de la mémoire 10.

La figure 3 illustre un réseau systolique de quatre lignes et de cinq colonnes. Ce réseau comprend des cellules dites "S", des buffers "B", des additionneurs "Add", des cellules de dérivation 301 et une cellule de dérivation finale 302.

Les cellules S exécutent le calcul |a-b|, où a et b sont respectivement les valeurs d'un pixel du bloc courant et d'un pixel de la fenêtre de référence. La sortie de chaque cellule S d'une même ligne est reliée par un buffer B à l'entrée de la cellule S suivante. Un buffer B est également présent devant chaque première cellule S d'une ligne. Les valeurs de pixels b se propagent d'un buffer à un buffer suivant sur une même ligne à chaque cycle. Les buffers maintiennent les valeurs b pendant que les cellules S effectuent leurs calculs.

Chaque cellule S possède aussi une sortie C, qui fournit le résultat de l'opération |a-b|. Les sorties C sont également connectées à des buffers B. Tous les buffers B d'une même colonne sont reliés à un même additionneur Add. Il y a donc autant d'additionneurs que de colonnes.

La sortie d'un additionneur est reliée à l'entrée de l'additionneur suivant par trois buffers B en série. Suivant le mode de fonctionnement choisi, le dernier de ces trois buffers est ou non court-circuité par une cellule de dérivation 301.

La cellule de dérivation finale fournit soit une valeur de la fonction d'erreur à chaque cycle en fonctionnement normal non-entrelacé, soit une valeur de la fonction d'erreur tous les deux cycles en mode entrelacé. Dans ce dernier cas, l'additionneur intégré dans cette cellule de dérivation finale 302 additionne deux valeurs consécutives de la fonction d'erreur.

Selon une variante de réalisation, les additionneurs Add sont réalisés à l'aide d'additionneurs à trois entrées à sauvegarde de retenue ("Three input carry save adders")

La figure 4 représente plus en détail les fonctions d'une cellule S. La cellule S comprend une entrée 401, une sortie 402 reliée directement à l'entrée 401, une unité de calcul 403 possédant deux entrées dont l'une est reliée à l'entrée 401 et l'autre à la sortie d'un multiplexeur 404 permettant de selectionner par l'intermédiaire d'un ligne de sélection 405 soit le contenu d'un buffer 406, soit le contenu d'un buffer 407. Les entrées des buffers 406 et 407 sont également reliées à l'entrée 401 de la cellule.

Chacun des deux buffers contient une valeur de pixel d'un bloc courant. Ces valeurs sont chargées à travers l'entrée 401 au moment opportun. Les circuits de commande des buffers sont classiques et ne seront pas illustrés plus en détail. La présence en parallèle de deux buffers permet entre autres de stocker en même temps deux blocs courants dans un seul réseau systolique. Ainsi, deux comparaisons pourront être effectuées pour une même position dans la fenêtre de référence. On réduit ainsi la quantité de données transitant entre la mémoire dynamique 10 et le coprocesseur 3.

La présence de deux buffers dans chaque cellule S permet d'autre part un fonctionnement dit entrelacé qui permet de doubler le nombre de lignes du bloc courant par rapport au nombre de lignes du réseau systolique. Ce fonctionnement sera abordé plus loin.

L'unité de calcul fournit la valeur absolue de la différence des deux valeurs présentes à ses entrées.

On notera que dans le cadre de cet exemple, les valeurs b des pixels de la fenêtre de référence sont stockées dans les buffers B entre les cellules S, tandis que les valeurs a des pixels du ou des blocs courants sont stockées dans les buffers des cellules S.

On notera également que les fonctions d'accumulation des résultats intermédiaires produits par les cellules S sont réalisées entièrement par les additionneurs en bas de chaque colonne de cellules S.

Le fonctionnement normal (non entrelacé) du réseau systolique sera expliqué à l'aide du schéma de la figure 5. Ce schéma représente un réseau systolique comprenant une seule ligne et huit colonnes. Le fonctionnement d'un réseau avec un plus grand nombre de lignes est tout à fait similaire, les résultats en sortie de chaque cellule S (sortie S) se présentant au même moment aux additionneurs. Dans le cadre du fonctionnement normal, seulement deux buffers B sont nécessaires entre chaque additionneur en bout de colonne. Pour la clarté du schéma, le troisième buffer et la cellule de dérivation ne sont pas illustrés.

Les valeurs de pixel a sont déjà mémorisées dans le réseau. Une valeur b est présentée à l'entrée du réseau à chaque cycle. Le tableau 1 représente l'évolution des sorties C sur un certain nombre de cycles.

Tableau 1

| Cyc. | C0 | C1 | C2 | C3 | C4 | C5 | C6 | C7 |
|---|---|---|---|---|---|---|---|---|
| 0 | --- | --- | --- | --- | --- | --- | --- | --- |
| 1 | **\|b0-a0\|** | --- | --- | --- | --- | --- | --- | --- |
| 2 | \|b1-a0\| | \|b0-a1\| | --- | --- | --- | --- | --- | --- |
| 3 | \|b2-a0\| | **\|b1-a1\|** | \|b0-a2\| | --- | --- | --- | --- | --- |
| 4 | \|b3-a0\| | \|b2-a1\| | \|b1-a2\| | \|b0-a3\| | --- | --- | --- | --- |
| 5 | \|b4-a0\| | \|b3-a1\| | **\|b2-a2\|** | \|b1-a3\| | \|b0-a4\| | --- | --- | --- |
| 6 | \|b5-a0\| | \|b4-a1\| | \|b3-a2\| | \|b2-a3\| | \|b1-a4\| | \|b0-a5\| | --- | --- |
| 7 | \|b6-a0\| | \|b5-a1\| | \|b4-a2\| | **\|b3-a3\|** | \|b2-a4\| | \|b1-a5\| | \|b0-a6\| | --- |
| 8 | \|b7-a0\| | \|b6-a1\| | \|b5-a2\| | \|b4-a3\| | \|b3-a4\| | \|b2-a5\| | \|b1-a6\| | \|b0-a7\| |
| 9 | \|b8-a0\| | \|b7-a1\| | \|b6-a2\| | \|b5-a3\| | **\|b4-a4\|** | \|b3-a5\| | \|b2-a6\| | \|b1-a7\| |
| 10 | \|b9-a0\| | \|b8-a1\| | \|b7-a2\| | \|b6-a3\| | \|b5-a4\| | \|b4-a5\| | \|b3-a6\| | \|b2-a7\| |
| 11 | \|b10-a0\| | \|b9-a1\| | \|b8-a2\| | \|b7-a3\| | \|b6-a4\| | **\|b5-a5\|** | \|b4-a6\| | \|b3-a7\| |
| 12 | \|b11-a0\| | \|b10-a1\| | \|b9-a2\| | \|b8-a3\| | \|b7-a4\| | \|b6-a5\| | \|b5-a6\| | \|b4-a7\| |
| 13 | \|b12-a0\| | \|b11-a1\| | \|b10-a2\| | \|b9-a3\| | \|b8-a4\| | \|b7-a5\| | **\|b6-a6\|** | \|b5-a7\| |
| 14 | \|b13-a0\| | \|b12-a1\| | \|b11-a2\| | \|b10-a3\| | \|b9-a4\| | \|b8-a5\| | \|b7-a6\| | \|b6-a7\| |
| 15 | \|b14-a0\| | \|b13-a1\| | \|b12-a2\| | \|b11-a3\| | \|b10-a4\| | \|b9-a5\| | \|b8-a6\| | **\|b7-a7\|** |

Pendant le cycle 0, la valeur b0 est mémorisée dans le premier buffer B (référence 501) en entrée du réseau. Ce n'est qu'au cycle 1 que le résultat fourni par la première cellule S est mémorisé dans le buffer 502 en sortie C0. Pendant le cycle 1, la valeur b0 est également mémorisée par le second buffer B 503.

A un moment donné du fonctionnement du réseau, on devra retrouver à la sortie du dernier additionneur la somme de toutes valeurs absolues des différences correspondant une position donnée du bloc courant (en l'occurrence une ligne de 8 pixels) dans la fenêtre de référence. Les résultats qui doivent s'ajouter au niveau de additionneurs pour la première ligne de la fenêtre de référence sont indiqués en gras dans le tableau.

Cette fonction d'accumulation conditionne le retard introduit par les buffers 504 entre les additionneurs. On voit que l'on doit introduire un retard de deux cycles pour que la propagation des résultats au niveau des additionneurs se fasse de manière adéquate. Ceci explique la présence de deux buffers entre chaque additionneur. Chaque buffer introduit un retard d'un cycle. Dit d'une autre façon, les deux buffers 504 et 505 entre les deux premiers additionneur annulent le retard introduit par les buffers 501 et 502.

Au bout du quinzième cycle, la valeur de la fonction Err pour la première position possible du bloc courant est présente à la sortie 506 du réseau.

On notera que lors de ce fonctionnement, seul une des deux valeurs a mémorisée dans chaque cellule S est utilisée. Selon une variante de réalisation, un seul buffer de mémorisation des valeurs de pixel du bloc courant est utilisé dans chaque cellule S.

La figure 6 et le tableau 7 illustrent le fonctionnement d'un réseau systolique en mode dit entrelacé. Ce mode permet de déterminer des fonctions d'erreur pour des blocs courants comportant un nombre de lignes égal au double du nombre de lignes du réseau systolique. Ceci est réalisé simplement en ajoutant un buffer supplémentaire dans chaque cellule S ainsi qu'un buffer supplémentaire entre chaque additionneur.

La figure 6 est similaire à la figure 5, en dehors du fait qu'un buffer supplémentaire est inséré entre chaque paire d'additionneurs. D'autre part, chaque cellule S comporte les deux buffers internes illustrés à la figure 4. Pendant les cycles pairs, le contenu du premier buffer de chaque cellule S est mulitplexé vers l'unité de calcul correspondante, tandis que le contenu du second buffer est utilisé lors des cycles impairs.

Le bloc courant de taille double est séparé en deux sous-blocs a et a' superposés verticalement. Le premier sous-bloc a est stocké dans les premiers buffers de chaque cellule S, tandis que le second sous-bloc a' est stocké dans les seconds buffers de chaque cellule S.

La bande de la fenêtre de référence possède de manière identique un nombre de lignes doublé. Elle comprend une sous-bande supérieure b et une sous-bande inférieure b'. Pendant un cycle pair, une colonne de la sous-bande b est présentée à l'entrée du réseau systolique, tandis qu'une colonne de b' est présentée pendant les cycles impairs.

Le tableau 2 donne l'état des sorties c après chaque cycle. De même que précédemment, les caractères gras indiquent les résultats intermédiaires qui devront s'additionner pour former une fonction d'erreur correspondant à un sous-bloc.

L'alternance entre les deux sous-blocs et les deux sous-bandes introduit, par rapport à un fonctionnement non-entrelacé, un délai supplémentaire d'un cycle entre la présence à la sortie d'un additionneur de l'erreur cumulée correspondant à une position donnée et la présence du résultat intermédiaire correspondant à l'entrée de l'additionneur suivant. Pour cette raison, un troisième buffer est inséré entre chaque paire d'additionneurs.

Le dernier additionneur 601 du réseau de la figure 6 est relié d'une part à une première entrée d'un additionneur 602, d'autre part à un buffer 603 dont la sortie est reliée à la deuxième entrée de l'additionneur 602.

La fonction d'erreur correspondant à un sous-bloc est fournie à la sortie de l'additionneur 601 à chaque cycle (une fois le réseau correctement initialisé). Le tableau 2 montre que la valeur de la fonction d'erreur correspondant au sous-bloc a' est en retard d'un cycle sur celle correspondant au sous-bloc a. Il faut additionner les deux valeurs pour obtenir la valeur de la fonction d'erreur correspondant au bloc entier a+a'. Pendant un premier cycle, la valeur correspondant à a est mémorisée dans le buffer 603. Au cycle suivant, la valeur correspondant au bloc a' est présente en sortie de l'additionneur 601. L'additionneur 602 effectue la somme. Un résultat valide est donc présent à la sortie de l'additionneur 602 tous les deux cycles.

Ce fonctionnement en mode dit entrelacé est très interessant car il permet de réduire la taille du bus de données qui achemine les bandes de pixels vers le coprocesseur.

Selon une variante de réalisation, le réseau systolique est conçu pour traiter des blocs courants possédant un nombre de lignes égal à N fois le nombre de lignes du réseau, où N est un entier supérieur à 2.

Tableau 2

| Cyc. | C0 | C1 | C2 | C3 | C4 | C5 | C6 | C7 |
|---|---|---|---|---|---|---|---|---|
| 0 | --- | --- | --- | --- | --- | --- | --- | --- |
| 1 | **\|b0-a0\|** | --- | --- | --- | --- | --- | --- | --- |

Tableau 2 (suite)

| Cyc. | C0 | C1 | C2 | C3 | C4 | C5 | C6 | C7 |
|---|---|---|---|---|---|---|---|---|
| 2 | \|b0'-a0'\| | \|b0-a1\| | --- | --- | --- | --- | --- | --- |
| 3 | \|b1-a0\| | \|b0'-a1'\| | \|b0-a2\| | --- | --- | --- | --- | --- |
| 4 | \|b1'-a0'\| | **\|b1-a1\|** | \|b0'-a2'\| | \|b0-a3\| | --- | --- | --- | --- |
| 5 | \|b2-a0\| | \|b1'-a1'\| | \|b1-a2\| | \|b0'-a3'\| | \|b0-a4\| | --- | --- | --- |
| 6 | \|b2'-a0'\| | \|b2-a1\| | \|b1'-a2'\| | \|b1-a3\| | \|b0'-a4'\| | \|b0-a5\| | --- | --- |
| 7 | \|b3-a0\| | \|b2'-a1'\| | **\|b2-a2\|** | \|b1'-a3'\| | \|b1-a4\| | \|b0'-a5'\| | \|b0-a6\| | --- |
| 8 | \|b3'-a0'\| | \|b3-a1\| | \|b2'-a2'\| | \|b2-a3\| | \|b1'-a4'\| | \|b1-a5\| | \|b0'-a6'\| | \|b0-a7\| |
| 9 | \|b4-a0\| | \|b3'-a1'\| | \|b3-a2\| | \|b2'-a3'\| | \|b2-a4\| | \|b1'-a5'\| | \|b1-a6\| | \|b0'-a7'\| |
| 10 | \|b4'-a0'\| | \|b4-a1\| | \|b3'-a2'\| | **\|b3-a3\|** | \|b2'-a4'\| | \|b2-a5\| | \|b1'-a6'\| | \|b1-a7\| |
| 11 | \|b5-a0\| | \|b4'-a1'\| | \|b4-a2\| | \|b3'-a3'\| | \|b3-a4\| | \|b2'-a5'\| | \|b2-a6\| | \|b1'-a7'\| |
| 12 | \|b5'-a0'\| | \|b5-a1\| | \|b4'-a2'\| | \|b4-a3\| | \|b3'-a4'\| | \|b3-a5\| | \|b2'-a6'\| | \|b2-a7\| |
| 13 | \|b6-a0\| | \|b5'-a1'\| | \|b5-a2\| | \|b4'-a3'\| | **\|b4-a4\|** | \|b3'-a5'\| | \|b3-a6\| | \|b2'-a7'\| |
| 14 | \|b6'-a0'\| | \|b6-a1\| | \|b5'-a2'\| | \|b5-a3\| | \|b4'-a4'\| | \|b4-a5\| | \|b3'-a6'\| | \|b3-a7\| |
| 15 | \|b7-a0\| | \|b6'-a1'\| | \|b6-a2\| | \|b5'-a3'\| | \|b5-a4\| | \|b4'-a5'\| | \|b4-a6\| | \|b3'-a7'\| |
| 16 | \|b7'-a0'\| | \|b7-a1\| | \|b6'-a2'\| | \|b6-a3\| | \|b5'-a4'\| | **\|b5-a5\|** | \|b4'-a6'\| | \|b4-a7\| |

La figure 7 représente schématiquement le coprocesseur suivant une première variante de l'exemple de réalisation. Selon cette variante, le coprocesseur comprend dix piles premier entré premier sorti (piles FIFO) 701 à 710, reliées en parallèle sur le bus de données 11. Le nombre de mots de données par FIFO détermine le nombre de colonnes de pixels de la fenêtre de recherche. Les sorties des piles 701 à 710 sont reliées à un circuit de commutation 712 possédant dix entrées et huit sorties 714 à 721.

Le circuit 712 permet de connecter la sortie de n'importe laquelle des dix FIFOs sur n'importe laquelle des huit sorties du circuit. Chaque FIFO contient une ligne entière de la fenêtre de recherche. Les huit FIFOs connectées à une sortie à un moment donné correspondent aux lignes de la bande de la fenêtre de recherche traitée.

Les deux FIFOs supplémentaires non connectées sont chargées par l'intermédiaire du bus de données à partir des données stockées dans la mémoire 10. Les données chargées correspondent aux lignes de la fenêtre de recherche qui diffèrent par rapport aux bandes en cours de traitement.

Supposons par exemple que la première bande de huit lignes L1 à L8 d'une fenêtre de recherche est contenue dans les FIFOs 701 à 708. Pendant le traitement de ces huit lignes, la ligne L9 est chargée dans la FIFO 709. Lorsque le traitement de la première bande est terminé, la ligne L1 stockée dans la FIFO 701 devient inutile. La seconde bande contient en effet les lignes L2 à L9. Le traitement de cette seconde bande peut donc commencer sans temps mort, puisque la bande complète est présente dans les FIFOs. Le circuit de commutation 802 de type "crossbar" aura pour charge de rétablir le bon ordre des lignes mémorisées avant présentation aux réseaux systoliques 722 à 725.

Dans le cas où les bandes ont huit lignes, neuf FIFOs sont suffisantes pour le fonctionnement décrit. La dixième FIFO est utilisée par exemple lorsqu'on traite deux bandes de quatre lignes en parallèle.

Selon la présente variante, quatre réseaux systoliques 722 à 725 de quatre lignes et de seize colonnes chacun sont connectés aux sorties du circuit de commutation. Par convention, on dira que la sortie 714 représente la ligne supérieure d'une bande de huit lignes, tandis que la sortie 721 représente la ligne inférieure. Les premier et troisième réseaux (respectivement 722 et 724) sont connectés aux quatre sorties supérieures 714 à 717, tandis que les les second et quatrième réseaux (respectivement 723 et 725) sont connectés aux quatre sorties inférieures 718 à 721.

La disposition ci-dessus permet de traiter de façon flexible des blocs courants de tailles différentes. On peut en effet considérer les quatre réseaux de différentes manières:

Huit réseaux de 4*8 éléments, chaque réseau de 4*16 éléments traitant deux blocs courants de 4*8 éléments;
Quatre réseaux de 8*8 éléments;
Deux réseaux de 8*16 éléments;
Deux réseaux de 16*16 éléments.

Dans ce dernier cas, les réseaux travaillent en mode entrelacé, seulement huit sorties étant disponibles et non seize. Les huit sorties fourniront alternativement des colonnes de huit pixels d'une bande supérieure et d'une bande inférieure de la fenêtre de référence.

Il est bien sûr envisageable d'utiliser seize FIFOs au lieu de huit (sans compter les FIFOs nécessaires au chargement de la ligne suivante).

Comme il a été dit précédemment, la profondeur des FIFOs détermine la largeur de la fenêtre de référence. Dans le cas où l'on travaille avec des réseaux de 4*8 éléments, il est possible de grouper les FIFOs par deux et de stocker dans chaque paire de FIFOs l'équivalent d'une ligne de pixels de longueur double.

La figure 7 indique d'autre part sous la forme de flèches la façon de grouper les résultats de calcul à la sortie de chaque réseau de 4*16 éléments suivant le mode de fonctionnement.

La figure 8 illustre une seconde variante de l'exemple de réalisation. Neuf FIFOs (regroupés sous la référence 801) alimentent un circuit de commutation 802. Le coprocesseur suivant le présent exemple comporte huit réseaux systoliques 803 à 810 de 4*8 éléments. En fait, deux réseaux 4*8 en cascade de la figure 8 équivalent à un réseau 4*16 de la figure 7. La figure 8 permet de mieux illustrer le cheminement des résultats de calcul de chacun des réseaux lorsque huit blocs courants de 4*8 sont traités en parallèle. Exemple sera pris sur les deux réseaux supérieurs 803 et 804. Le résultat final (c'est à dire la valeur de la fonction d'erreur) à la sortie du réseau 803 est transmis directement au réseau 804. Suivant que l'on travaille avec huit blocs courants de 4*8 ou quatre blocs courants de 8*8, ce résultat à la sortie du réseau 803 doit ou non être disponible pour un traitement ultérieur. Dans le cas où l'on travaille avec 8 blocs courants de 4*8 pixels, ce résultat sera nécessaire pour la détermination du vecteur mouvement du bloc courant traité par le réseau 803.

Selon la présente variante de réalisation, une cellule M est associée à chaque réseau de 4*8 éléments. Chaque cellule M détermine la valeur minimale de la fonction d'erreur en sortie d'un des réseaux parmi toutes les valeurs d'erreur associées à un bloc et garde en mémoire les coordonnées du vecteur mouvement correspondant. Les résultats sont communiqués à travers un bus de données spécifique 811.

Les sorties des réseaux 803 et 804, 807 et 808 sont connectés chacun à l'entrée d'un multiplexeur à deux entrées, dont la sortie est connectée à l'entrée de la cellule M associée. La sortie de chacun des mêmes réseaux est aussi connectée à l'entrée d'un additionneur à deux entrées qui reçoit sur son autre entrée la sortie du réseau immédiatement inférieur. Pour les réseaux 803, 804, 807 et 808, il s'agit respectivement des sorties des réseaux 805, 806, 809 et 810.

Lorsque le processeur travaille sur huit blocs courants de 4*8 pixels chacun, la sortie de chaque réseau est directement reliée à la cellule M associée. Chaque cellule M détermine alors de façon autonome la valeur minimale de la fonction d'erreur et le vecteur mouvement. Il en résulte huit vecteurs distincts. Les valeurs de la fonction d'erreur en sortie des réseaux 803, 805, 807 et 809 ne sont pas transmises aux réseaux qui les suivent en série. Le multiplexeur qui réalise cette transmission ou non-transmission n'est pas illustré sur les schémas.

Lorsque le processeur travaille sur quatre blocs de 8*8 pixels, les multiplexeurs commutent pour que l'une des cellules M associée avec deux réseaux superposés travaillant sur le même bloc reçoive la somme des valeurs des fonctions d'erreur calculées par ces deux réseaux. Par exemple, la cellule M associée au réseau 803 fera ses calculs à partir des valeurs de la fonction d'erreur correspondant au bloc 8*8 traité dans les réseaux 803 et 805. Un seul vecteur en résultera. Comme dans le cas du paragraphe précédent, les valeurs de la fonction d'erreur issues de la première colonne de réseaux ne sont pas transmises à la seconde colonne.

Lorsque le processeur travaille sur deux blocs de 8*16 pixels, seulement les cellules M associées aux réseaux 804 et 808 sont utilisées. Les paires de réseaux 4*8 803 et 804, 805 et 806, 807 et 808 et finalement 809 et 810 sont considérés comme ne formant chacune qu'un réseau continu de dimensions 4*16. Par exemple, l'additionneur associé au réseau 804 additionne les erreurs issus des réseaux 804 et 806. Les valeurs de la fonction d'erreur calculées par les réseaux 803 et 805 sont incluses dans les valeurs de la fonction d'erreur calculées par les réseaux 804 et 806; transmises à ces dernières par l'intermédiaire des connexions entre les réseaux 803 et 804 respectivement 805 et 806.

Dans le cas du mode entrelacé, le principe est identique. Simplement, la ou les cellules M maintiennent en mémoire deux vecteurs mouvement, un pour chaque bloc.

La commutation des multiplexeurs est commandée par le contrôleur 2 de la figure 1, en fonction du mode de fonctionnement choisi.

Chaque cellule M comprend le dispositif conforme au présent exemple de réalisation. Ce dispositif est illustré par la figure 10.

Il comprend deux compteurs 1001 et 1002 qui comportent les coordonnées X et Y du vecteur mouvement correspondant au bloc de la fenêtre de référence actuellement examinée. Le compteur 1001 contient l'abscisse X du vecteur, tandis que le compteur 1002 contient l'ordonnée Y.

Le compteur 1001 est initialisé à une valeur X0 à chaque fois que l'on commence à introduire une nouvelle bande de la fenêtre de recherche dans le réseau, c'est à dire à chaque fois que l'on va à la ligne. Il est incrémenté pour chaque pixel ou colonne de pixels introduit dans le réseau.

Le compteur 1002 est initialisé à une valeur Y0 lorsque l'on change de fenêtre de recherche. Il est incrémenté pour chaque nouvelle bande introduite dans le réseau.

Les valeurs X0 et Y0 correspondent aux coordonnées relatives du bloc de la fenêtre de recherche par rapport à la position du bloc courant dans cette fenêtre. Cette relation est illustrée par la figure 9b. La figure 9a indique quant à elle la stratégie de comparaison. Le premier bloc de la fenêtre de référence comparé au bloc courant est le bloc dans le coin supérieur gauche de la fenêtre. La comparaison se poursuit par les autres blocs de la même bande, de gauche à droite. Chaque bande débute par le bloc le plus à gauche.

X et Y vont donc en s'incrémentant durant le balayage de la fenêtre de référence.

La cellule M comprend d'autre part deux registres Xmin 1003 et Ymin 1004, connectés respectivement aux compteurs 1001 et 1002. Chaque registre est capable de mémoriser le contenu du compteur associé s'il reçoit un signal de chargement "Load" élaboré par une autre partie de la cellule. Les registres Xmin et Ymin contiennent à tout moment les coordonnées du vecteur mouvement correspondant au plus près aux critères de sélection à un moment donné de la recherche.

La sortie de chaque compteur est reliée à l'une des deux entrées d'un circuit de calcul de norme 1005. Le circuit 1005 calcule une norme à partir des coordonnées X et Y du vecteur examiné à un moment donné.

La fonction implémentée par le circuit 1005 peut être une fonction de norme quelconque, comme la fonction classique:

$$\sqrt{(X^2 + Y^2)} \qquad (1)$$

Dans ce qui suit, la fonction de norme implémentée sera:

$$\|(X, Y)\| = \max\{|X|,|Y|\} \qquad (2)$$

Les avantages de cette fonction (2) en soi, mais particulièrement en liaison avec le code complément à deux seront vues plus loin, lors de la description détaillée du circuit 1005.

La fonction (2) est moins coûteuse à mettre en oeuvre que la fonction (1). De plus, les résultats obtenus par la fonction (2) sont identiques à ceux obtenus par la fonction (10 lorsque les vecteurs sont proches de l'horizontale ou de la verticale. L'approximation devient moins bonne au fur et à mesure que les vecteurs s'inclinent de 45 degrés par rapport à l'horizontale ou à la verticale. Cependant, les résultats obtenus sont tout à fait satisfaisants.

La sortie du circuit 1005 est connectée à un registre 1006 et à l'une des entrées d'un comparateur 1007 à deux entrées. Le chargement du registre 1006 est commandé par le même signal que le chargement des registres 1003 et 1004. La norme mémorisée par le registre 1006 est fournie à la seconde entrée du comparateur 1007. Ce dernier fournit un signal représentant un "1" logique lorsque la norme mémorisée est supérieure ou égale à la norme issue du circuit 1005.

La valeur de la fonction d'erreur correspondant au vecteur dont les coordonnées sont données par les deux compteurs est fournie à un quatrième registre 1008 et à une entrée d'un comparateur 1009. Le registre 1008 est également commandé par le signal "Load". La valeur mémorisée est fournie à une seconde entrée du comparateur 1009, qui fournit un premier signal représentant un "1" logique lorsque la valeur mémorisée dans le registre 1008 est inférieure à celle présente sur l'autre entrée du comparateur et un second signal représentant un "1" logique lorsque ces valeurs sont égales..

La sortie du comparateur 1007 et la sortie du comparateur 1009 correspondant à l'égalité des signaux à son entrée alimentent les entrées d'un "ET" logique 1010. La sortie du comparateur 1009 correspondant à une infériorité stricte alimente d'autre part une des entrées d'un "OU" logique à deux entrées 1011, dont l'autre entrée est alimentée par la sortie du "ET" logique. La sortie du "OU" correspond au signal "Load".

Le fonctionnement de la cellule est le suivant: les valeurs de la fonction d'erreur arrivent au fur et à mesure des calculs sur l'entrée de la cellule. Ces valeurs sont comparées à la valeur minimale stockée dans le registre 1008, ce registre étant mis à une valeur maximale pour chaque recherche d'un macro-bloc donné dans une fenêtre de référence donnée.

Si la valeur présente à l'entrée de la cellule est strictement inférieure à la valeur minimale intermédiaire mémorisée, le signal "Load" est activé par l'intermédiaire du "OU" 1011. Les coordonnées du vecteur mouvement correspondant sont mémorisées dans les registres 1003 et 1004, tandis que la norme correspondante est mémorisée dans le registre 1006.

Si la valeur de la fonction d'erreur présente à l'entrée de la cellule est strictement supérieure à celle mémorisée, le vecteur mouvement mémorisé ne change pas.

Si la valeur de la fonction d'erreur présente à l'entrée de la cellule est égale à celle mémorisée, une condition supplémentaire est nécessaire pour que le vecteur correspondant à la nouvelle valeur remplace le vecteur précédemment mémorisé: il faut que la norme du nouveau vecteur soit inférieure à celle de l'ancien vecteur. Cette comparaison est réalisée par le comparateur 1007. Cette condition supplémentaire permet un meilleur choix de vecteur mouvement dans le cas où les valeurs de la fonction d'erreur sont identiques pour plusieurs vecteurs mouvement différents.

La figure 11 illustre de manière plus détaillée le contenu du circuit de calcul de norme 1005 dans le cas où ce calcul est effectué sur la base de la fonction (2).

Suivant le code utilisé par les compteurs 1001 et 1002, le contenu du circuit 1005 varie pour effectuer un calcul différent pour l'obtention de la valeur absolue. Voici trois exemples:

(a) Nombres binaires signés:

$$|a| = a \text{ si } a >= 0$$

$$= -a \text{ si } a < 0$$

(b) Nombre en complément à deux:

$$|a| = a \text{ si } a >= 0$$

$$= \text{NON}(a)+1 \text{ si } a < 0$$

(c) Nombre en complément à 1:

$$|a| = a \text{ si } a >= 0$$

$$= \text{NON}(a) \text{ si } a < 0$$

En applicant la valeur absolue correspondant au complément à 1 à des nombres codés en complément à 2, on peut voir aisément à partir des points b et c ci-dessus qu'une erreur de 1 bit de plus faible valeur est commise dans le cas où a est strictement négatif. Aucune erreur n'est commise dans le cas où a est positif. Comparer les normes sur la base d'une telle valeur absolue "modifiée" n'introduit une mauvaise décision que dans des cas limites, où la différence des normes en valeur absolue est de 1. Par exemple, les vecteurs (-2,0) et (1,0) auront la même norme. ceci n'est pas gênant dans la mesure où l'erreur commise est minime, étant égale à la valeur d'un bit de poids le plus faible.

Les vecteurs (-1,0) et (0,0) auront aussi la même norme. Ce défaut peut être minimisé en utilisant un comparateur 1007 non strict. Dans ce cas, ce sera toujours le dernier vecteur parmi tous les vecteur ayant la même norme (et correspondant à la valeur minimale de la fonction d'erreur) qui sera pris en compte. Si les vecteurs (-3,0), (-2,0), (-1,0), (0,0), (1,0), (2,0) correspondent à cette valeur minimale, le vecteur (0,0) sera le vecteur choisi en définitive.

De façon générale, lorsque le choix entre un vecteur ayant une composante positive et un vecteur ayant une composante négative est permis, le vecteur ayant la composante positive sera choisi. De cette façon, on minimise le nombre de vecteurs ayant une erreur d'un pixel.

Même lorsque cette erreur est commise, elle peut être corrigée ultérieurement par un estimateur de mouvement plus fin (par exemple au niveau du demi-pixel).

Lorsque la valeur absolue correspondant au complément à 1 est appliquée aux nombres codés en complément à 2 issus des compteurs, prendre la valeur absolue se résume à effectuer un OU exclusif entre le bit de signe du nombre codé en complément à deux et les autres bits du même nombre. Ceci est illustré par la figure 11. Les résultats des deux OU exclusifs correspondant aux deux coordonnées sont comparés pour déterminer la plus grande des deux valeurs absolues. Un multiplexeur multiplexe alors la plus grande des valeurs vers la sortie du circuit 1005, suivant le résultat de la comparaison.

Il est bien sûr possible d'appliquer la valeur absolue du complément à deux au calcul de la norme, ceci exigeant toutefois l'emploi d'un additionneur supplémentaire.

La cellule illustrée par la figure 10 et décrite en conjonction avec le présent exemple de réalisation est une cellule adaptée aux modes du co-processeur à réseaux systoliques pour lesquels un réseau systolique ne calcule que les données correspondant à un seul vecteur mouvement à un moment donné. Comme il a été mentionné précédemment, un fonctionnement est possible où un réseau systolique mémorise deux blocs distincts et fournit un résultat pour chaque bloc un cycle sur deux. L'homme du métier pourra facilement adapter la cellule de sélection de vecteur mouvement décrite ci-dessus à un tel fonctionnement, en prévoyant notamment des registres supplémentaires pour la mémorisation des composantes des vecteurs correspondant aux deux blocs.

**Revendications**

**1.** Procédé de sélection de vecteurs mouvement dans un système de traitement d'images comprenant un estimateur de mouvement, ledit estimateur de mouvement calculant des valeurs d'une fonction d'évaluation, chaque valeur correspondant à un bloc de pixels d'une fenêtre de référence par rapport à un bloc de pixels courant, la position relative desdits blocs étant décrite par un vecteur mouvement, ledit procédé étant caractérisé en ce qu'il comprend les étapes

- de détermination de la plus petite valeur de ladite fonction d'évaluation,
- de comparaison des normes des vecteurs associés à ladite plus petite valeur,
- de sélection, parmi lesdits vecteurs associés, du vecteur ayant la plus petite norme.

**2.** Procédé selon la revendication 1, caractérisé en ce que le calcul de la norme desdits vecteurs est effectué selon la fonction:

$$\|(X,Y)\| = \max\{|X|,|Y|\}$$

où X et Y représentent les coordonnées d'un vecteur.

**3.** Procédé selon la revendication 2, caractérisé en ce que notamment les coordonnées des vecteurs étant codées en complément à deux, une valeur absolue modifiée d'une des coordonnées est obtenue en inversant les bits de la coordonnée lorsque ladite coordonnée est négative.

**4.** Procédé selon l'une des revendications précédentes, caractérisé en ce que la fenêtre de référence est balayée de façon à ce que les coordonnées des vecteurs mouvement soient des fonctions croissantes, et que lorsque plusieurs vecteurs correspondent à ladite plus petite valeur de la fonction d'évaluation, le dernier vecteur dans l'ordre de balayage est choisi.

**5.** Procédé selon l'une des revendications précédentes, caractérisé en ce que la fonction d'évaluation est de la forme:

$$Err(m,n) = \sum_i \sum_j D(a(i,j), b(i+m, j+n))$$

avec D(x,y) = |x-y| ou $D(x,y) = \sqrt{}(x^2 + y^2)$.

**6.** Dispositif de sélection de vecteurs mouvement dans un système de traitement d'images comprenant un estimateur de mouvement, ledit estimateur de mouvement calculant des valeurs d'une fonction d'évaluation, chaque valeur correspondant à un bloc de pixels d'une fenêtre de référence par rapport à un bloc de pixels courant, la position relative desdits blocs étant décrite par un vecteur mouvement, ledit dispositif étant caractérisé en ce qu'il comprend:

- des moyens de calcul (1005) de la norme des vecteurs mouvement,
- des moyens de comparaison (1008) de valeurs d'une fonction d'évaluation associée à chacun des vecteurs,
- des moyens de comparaison (1006, 1007) de la norme d'au moins les vecteurs associés à la valeur la plus petite de ladite fonction d'évaluation et
- des moyens de mémorisation (1003, 1004) d'un des vecteurs possédant la norme la plus petite.

**7.** Dispositif selon la revendication 6, caractérisé en ce que ladite fonction d'évaluation est une fonction de la distortion existant entre le bloc courant et le bloc de la fenêtre de référence.

**8.** Dispositif selon l'une des revendications 6 ou 7, caractérisé en ce que les moyens de calcul (1005) de la norme d'un vecteur comportent des portes logiques effectuant un ou exclusif (XOR) entre chaque composante (X, Y) du vecteur et son bit de signe.

**9.** Dispositif selon la revendication 8, caractérisé en ce que les moyens de calcul (1005) comportent d'autre part un comparateur et un multiplexeur dont la fonction est déterminer la plus petite valeur des composantes à la sortie du ou exclusif.

- des moyens de comparaison (1009) entre la valeur minimale intermédiaire (1008) d'une fonction d'évaluation des différences entre lesdits deux blocs, ladite valeur minimale intermédiaire correspondant à un premier vecteur mouvement mémorisé (1003, 1004),
- des moyens de comparaison (1007) entre la norme dudit premier vecteur mouvement (1006) et la norme d'un second vecteur mouvement auquel est associé la même valeur minimale de la fonction

## Claims

**1.** Process for selecting motion vectors in an image processing system comprising a motion estimator, the said motion estimator calculating values of an evaluation function, each value corresponding to a block of pixels of a reference window with respect to a current block of pixels, the relative position of the said blocks being described by a motion vector, the said process being characterized in that it comprises the steps

- of determining the smallest value of the said evaluation function,
- of comparing the norms of the vectors associated with the said smallest value,
- of selecting, from among the said associated vectors, the vector having the smallest norm.

**2.** Process according to Claim 1, characterized in that the calculation of the norm of the said vectors is performed according to the function:

$$\|(X, Y)\| = \max\{|X|, |Y|\}$$

where X and Y represent the coordinates of a vector.

**3.** Process according to Claim 2, characterized in that in particular the coordinates of the vectors being twos complement coded, a modified absolute value of one of the coordinates is obtained by inverting the bits of the coordinate when the said coordinate is negative.

**4.** Process according to one of the preceding claims, characterized in that the reference window is scanned in such a way that the coordinates of the motion vectors are increasing functions, and that when several vectors correspond to the said smallest value of the evaluation function, the last vector in the order of scanning is chosen.

**5.** Process according to one of the preceding claims, characterized in that the evaluation fuOnction is of the form:

$$Err(m,n) = \sum_i \sum_j D(a(i,j), b(i+m, j+n))$$

with $D(x,y) = |x-y|$ or $D(x,y) = \sqrt{(x^2 + y^2)}$.

**6.** Device for selecting motion vectors in an image processing system comprising a motion estimator, the said motion estimator calculating values of an evaluation function, each value corresponding to a block of pixels of a reference window with respect to a current block of pixels, the relative position of the said blocks being described by a motion vector, the said device being characterized in that it comprises:

- means (1005) for calculating the norm of the motion vectors,
- means (1008) for comparing values of an evaluation function associated with each of the vectors,

- means (1006, 1007) for comparing the norm of at least the vectors associated with the smallest value of the said evaluation function and
- means (1003, 1004) for storing one of the vectors possessing the smallest norm.

**7.** Device according to Claim 6, characterized in that the said evaluation function is a function of the distortion existing between the current block and the block of the reference window.

**8.** Device according to one of Claims 6 or 7,
characterized in that the means (1005) for calculating the norm of a vector comprise logic gates performing an exclusive OR (XOR) between each component (X, Y) of the vector and its sign bit.

**9.** Device according to Claim 8, characterized in that the calculating means (1005) moreover comprise a comparator and a multiplexer whose function is to determine the smallest value of the components at the output of the exclusive OR.
[lacuna]

- means (1009) for comparing between the intermediate minimum value (1008) of an evaluation function for evaluating the differences between the said two blocks, the said intermediate minimum value corresponding to a first stored motion vector (1003, 1004),
- means (1007) for comparing between the norm of the said first motion vector (1006) and the norm of a second motion vector with which the same minimum value of the function is associated

**Patentansprüche**

**1.** Verfahren zur Auswahl von Bewegungsvektoren in einem System zur Verarbeitung von Bildern mit einem Bewegungsschätzer, wobei der Bewegungsschätzer die Werte einer Auswertfunktion berechnet und jeder Wert einem Pixelblock eines Referenzfensters relativ zu einem laufenden Pixelblock entspricht und die relative Lage der Blöcke durch einen Bewegungsvektor beschrieben werden, gekennzeichnet durch folgende Schritte:

- Ermittlung des kleinsten Wertes der Auswertfunktion,
- Vergleich der Normen der zugehörigen Vektoren mit dem kleinsten Wert,
- Auswahl des Vektors mit der kleinsten Norm unter den zugehörigen Vektoren.

**2.** Verfahren nach Anspruch 1, dadurch gekennzeichnet, daß die Berechnung der Normen der Vektoren gemäß der folgenden Funktion erfolgt:

$$\|(X,Y)\| = \max\{|X|,|Y|\}$$

wobei X und Y die Koordinaten eines Vektors darstellen.

**3.** Verfahren nach Anspruch 2, dadurch gekennzeichnet, daß insbesondere die Koordinaten der Vektoren in einem 2. Komplement kodiert werden, daß ein geänderter Absolutwert einer der Koordinaten gebildet wird und die Bit der Koordinaten invertiert werden, wenn die Koordinate negativ ist.

**4.** Verfahren nach einem der vorangehenden Ansprüche, dadurch gekennzeichnet, daß das Referenzfenster derart abgetastet wird, daß die Koordinaten der Bewegungsvektoren ansteigende Funktionen sind, und daß dann, wenn mehrere Vektoren dem kleinsten Wert der Auswertfunktion entsprechen, der letzte Vektor in der Reihenfolge der Abtastung gewählt wird.

**5.** Verfahren nach einem der vorangehenden Ansprüche, dadurch gekennzeichnet, daß die Auswertfunktion folgende Form hat:

$$Err(m,n) = \sum_i \sum_j D(a(i,j), b(i+m, j+n))$$

mit D(x,y) = |x-y| oder D(x,y) = $\sqrt{(x^2 + y^2)}$.

6. Vorrichtung zur Auswahl von Bewegungsvektoren in einem System zum Verarbeiten von Bildern mit einem Bewegungsschätzer, wobei der Bewegungsschätzer Werte einer Auswertfunktion berechnet, jeder Wert einem Pixelblock eines Referenzfensters bezüglich eines laufenden Pixelblocks entspricht und die relative Lage der Blöcke durch einen Bewegungsvektor beschrieben wird, gekennzeichnet durch folgende Merkmale:

   - Mittel (1005) zur Berechnung der Norm der Bewegungsvektoren,
   - Mittel (1008) zum Vergleich der Werte einer zugehörigen Auswertfunktion mit jedem der Vektoren,
   - Mittel (1006, 1007) zum Vergleich der Norm wenigstens der zugehörigen Vektoren dem kleinsten Wert der Auswertfunktion und
   - Mittel (1003, 1004) zur Speicherung eines der Vektoren mit der kleinsten Norm.

7. Vorrichtung nach Anspruch 6, dadurch gekennzeichnet, daß die Auswertfunktion eine Funktion der zwischen dem laufenden Block und dem Block des Referenzfensters bestehenden Verzerrung ist.

8. Vorrichtung nach einem der Ansprüche 6 oder 7, dadurch gekennzeichnet, daß die Mittel (1005) zur Berechnung der Norm eines Vektors logische Gatter enthalten, die eine EXKLUSIV-ODER (XOR)-Funktion zwischen jeder Komponente (X, Y) des Vektors und seinem Vorzeichen-Bit bilden.

9. Vorrichtung nach Anspruch 8, dadurch gekennzeichnet, daß die Mittel (1005) zur Berechnung einerseits einen Komparator und andererseits einen Multiplexer enthalten, dessen Aufgabe es ist, den kleinsten Wert der Komponenten an Ausgang des EXKLUSIV-ODER zu ermitteln.

FIG.1

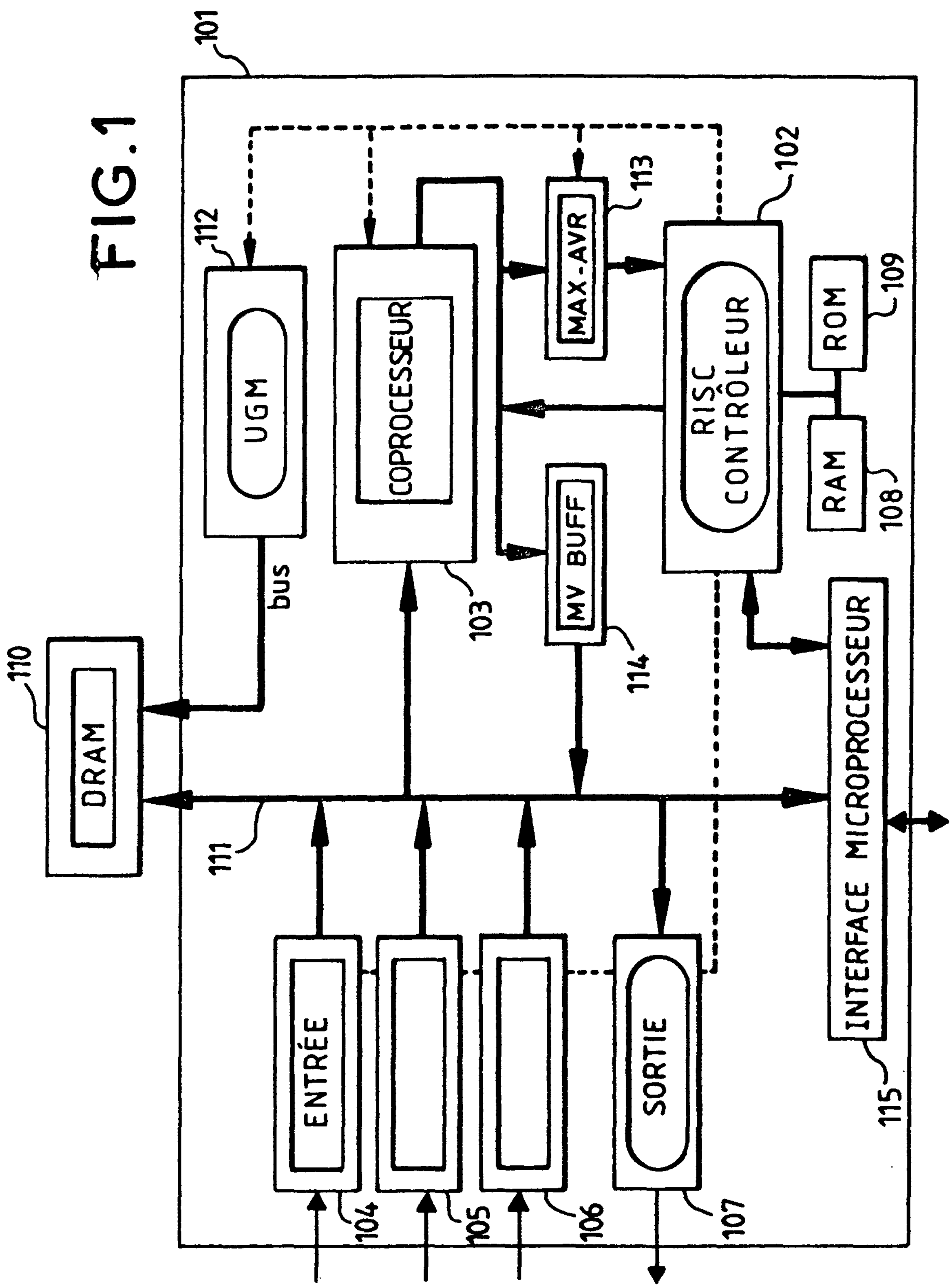

101
112
UGM
bus
COPROCESSEUR
103
MAX.-AVR
113
MV BUFF
114
RISC CONTRÔLEUR
102
ROM
109
RAM
108
DRAM
110
111
ENTRÉE
104
105
106
SORTIE
107
INTERFACE MICROPROCESSEUR
115

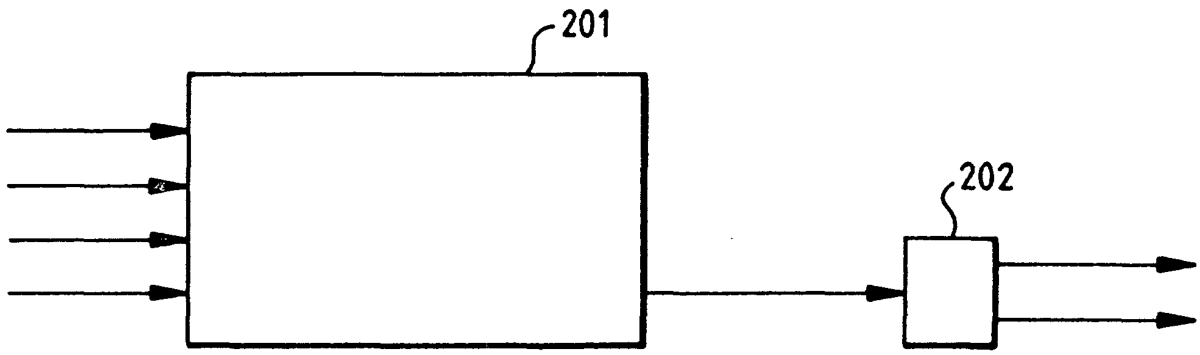


FIG.2a

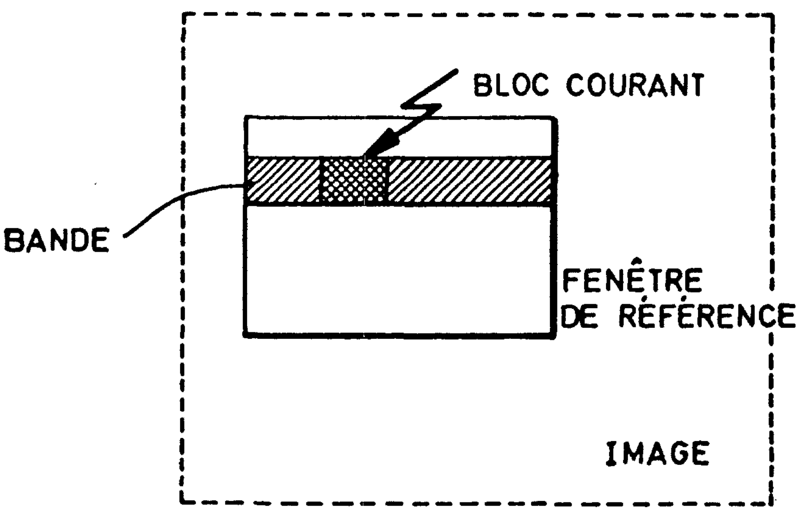


FIG.2b

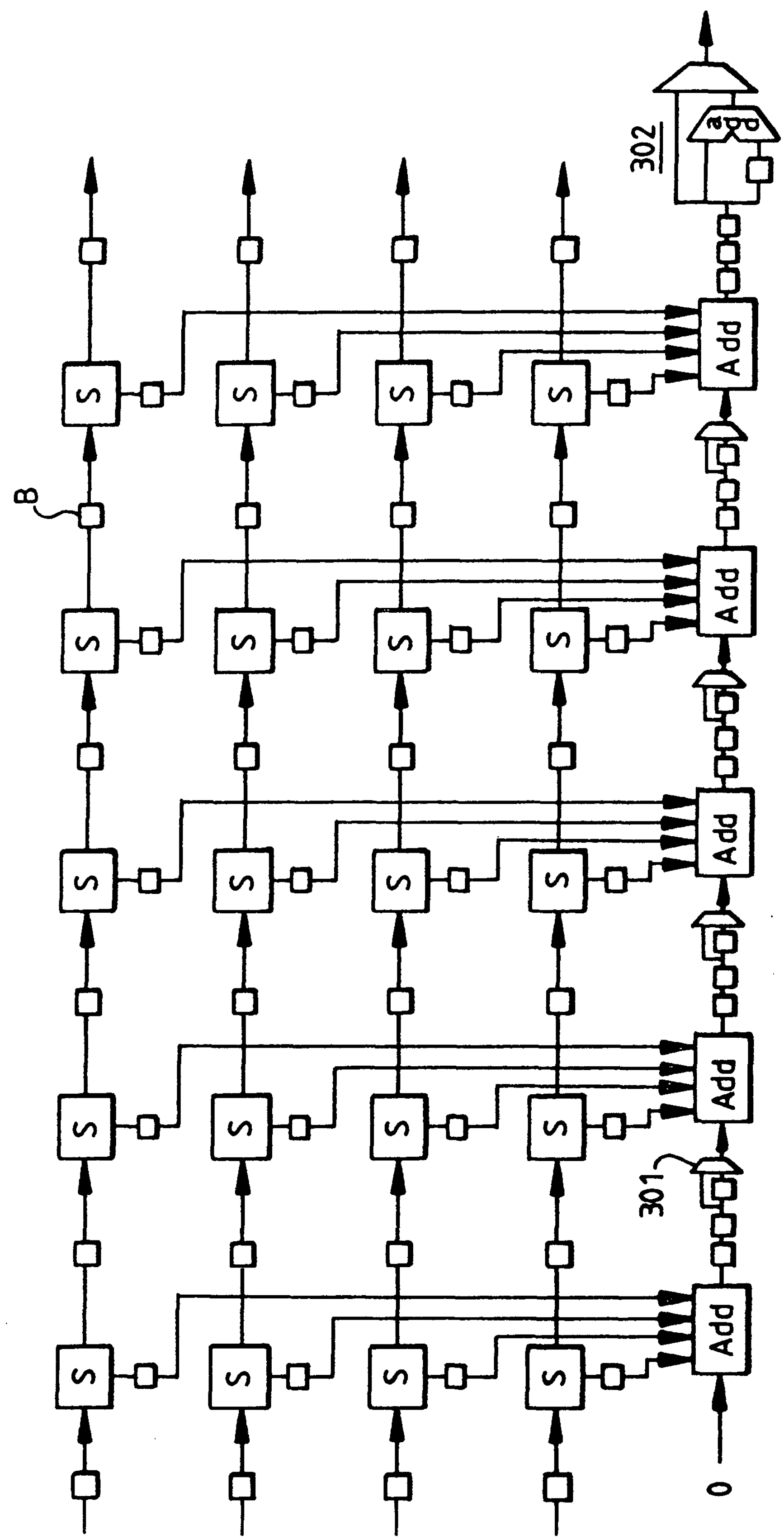


FIG.3

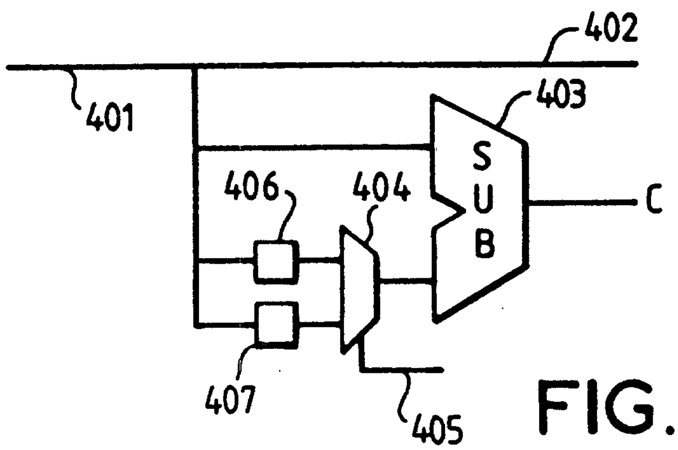
402
401
403
S
U
B
C
406
404
407
405

FIG.4

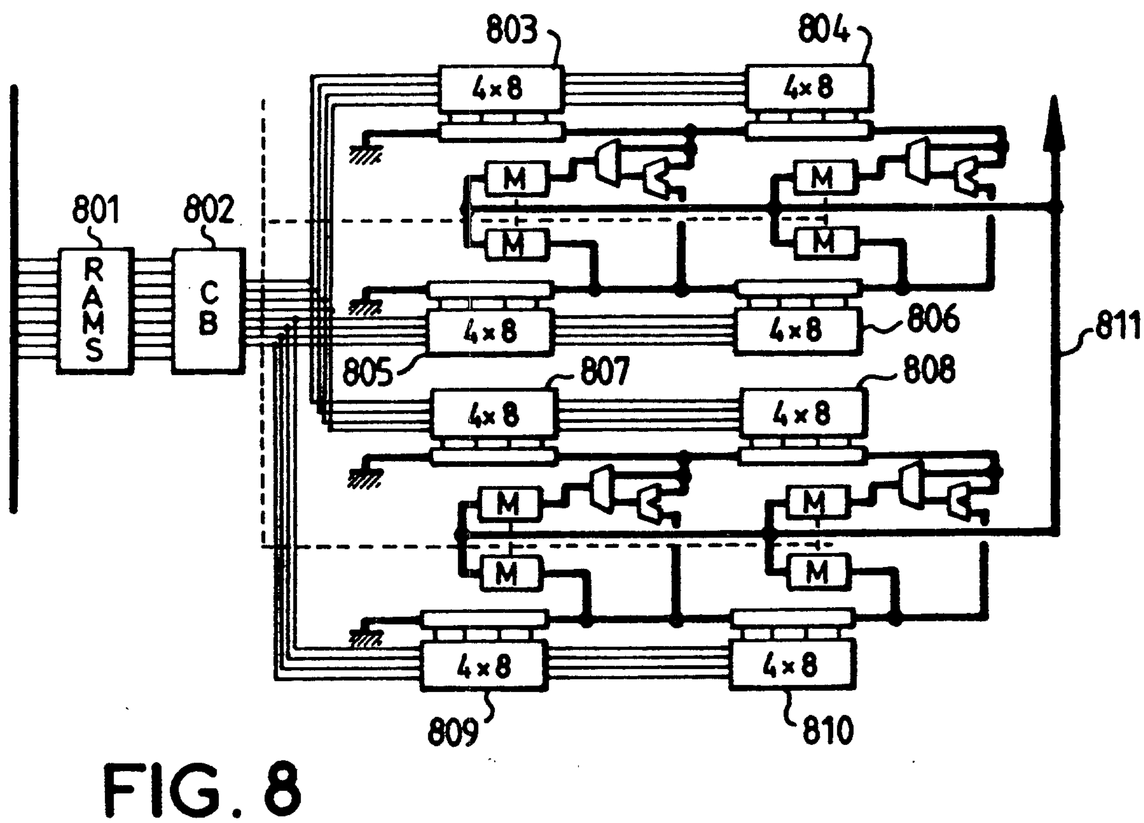
803
804
4×8
4×8
M
M
M
M
801
802
R
A
M
S
C
B
4×8
4×8
806
811
805
807
808
4×8
4×8
M
M
M
M
4×8
4×8
809
810

FIG. 8

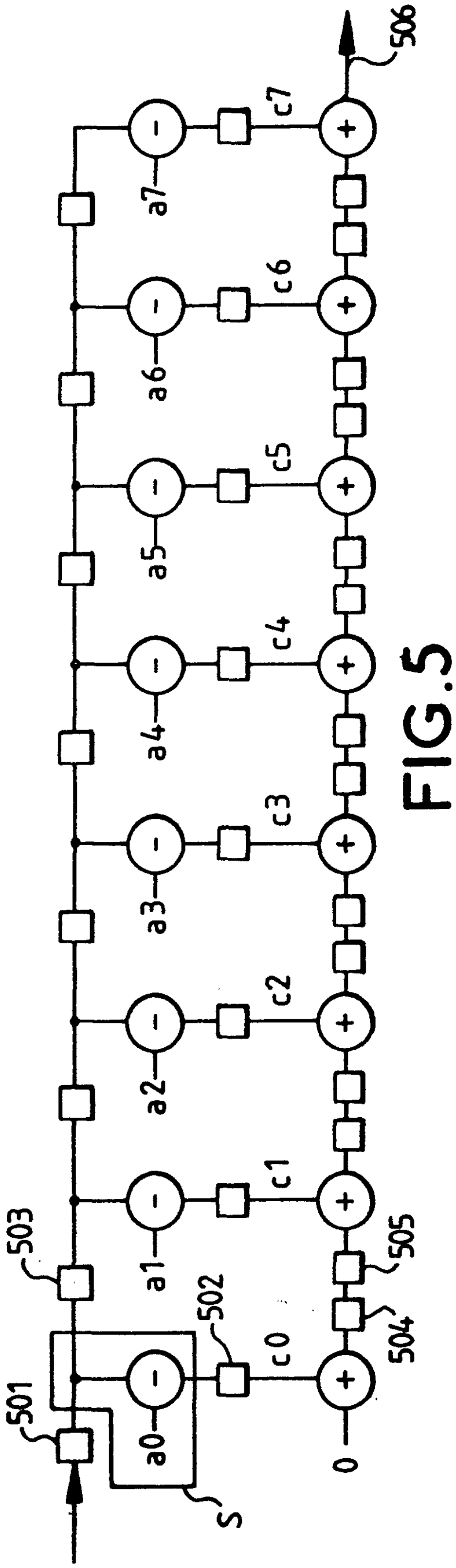
501
502
503
504
505
506
S
0
a0
a1
a2
a3
a4
a5
a6
a7
c0
c1
c2
c3
c4
c5
c6
c7

FIG.5

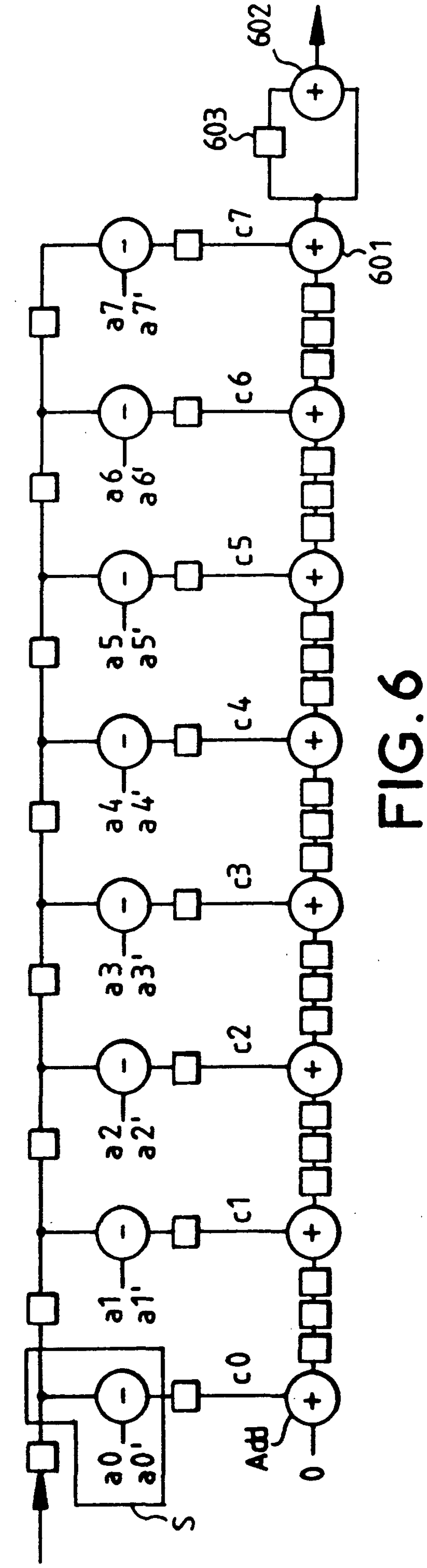
601
602
603
S
Add
0
a0 a0'
a1 a1'
a2 a2'
a3 a3'
a4 a4'
a5 a5'
a6 a6'
a7 a7'
c0
c1
c2
c3
c4
c5
c6
c7

FIG. 6

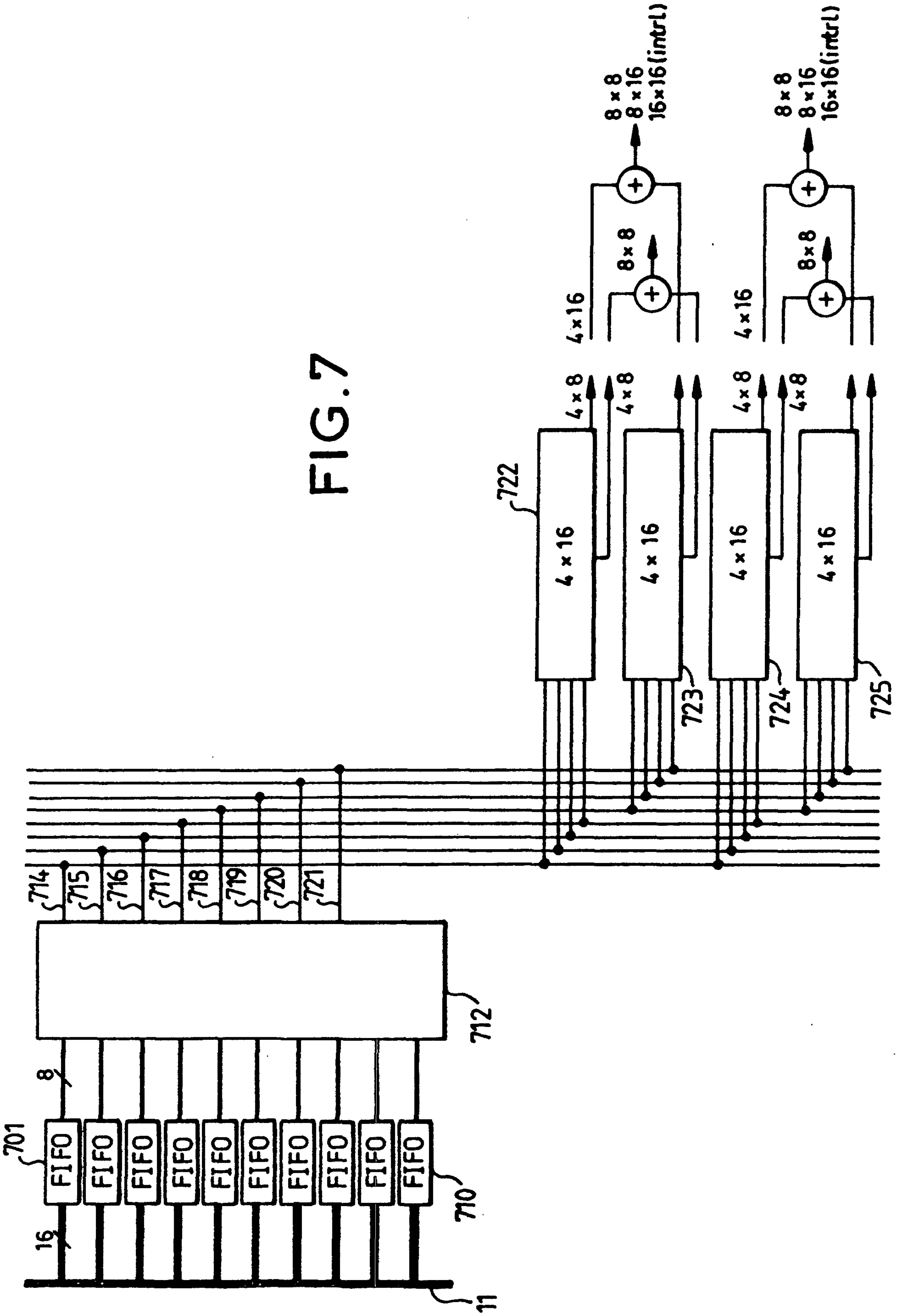

FIFO
701
710
11
16
8
712
714
715
716
717
718
719
720
721
722
723
724
725
4 × 16
4 × 8
4 × 16
8 × 8
8 × 16
16 × 16 (intrl)


FIG. 7

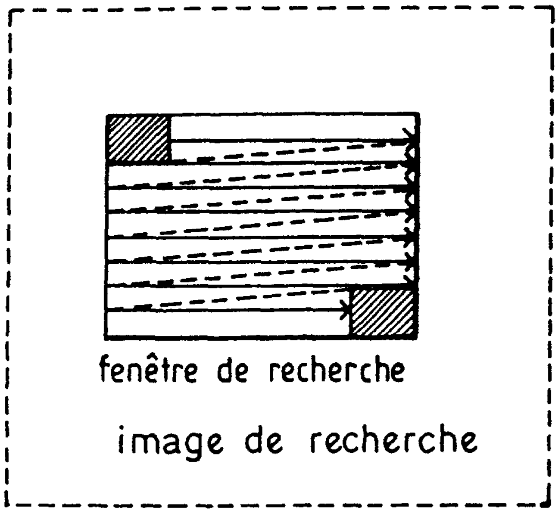


FIG.9a

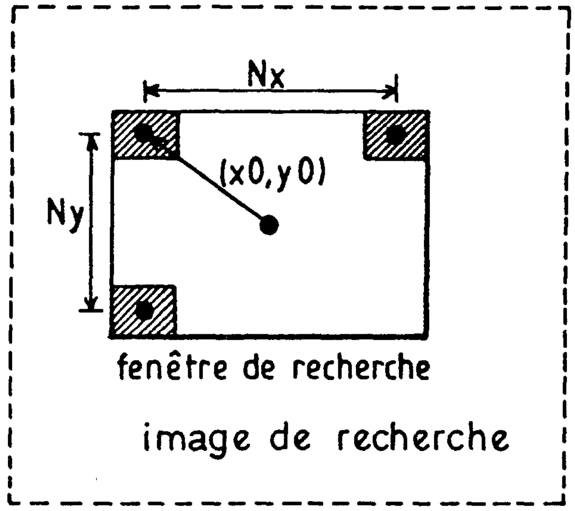


FIG.9b

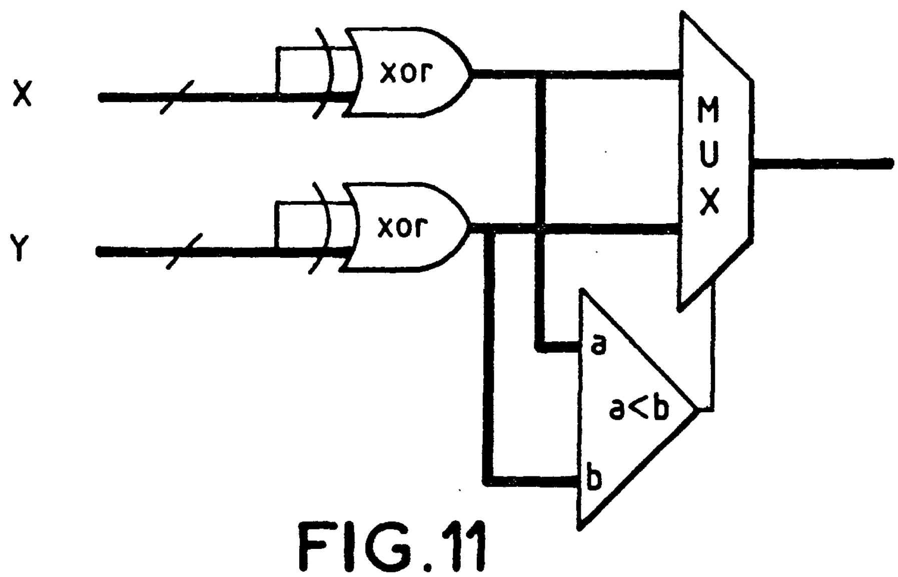


FIG.11

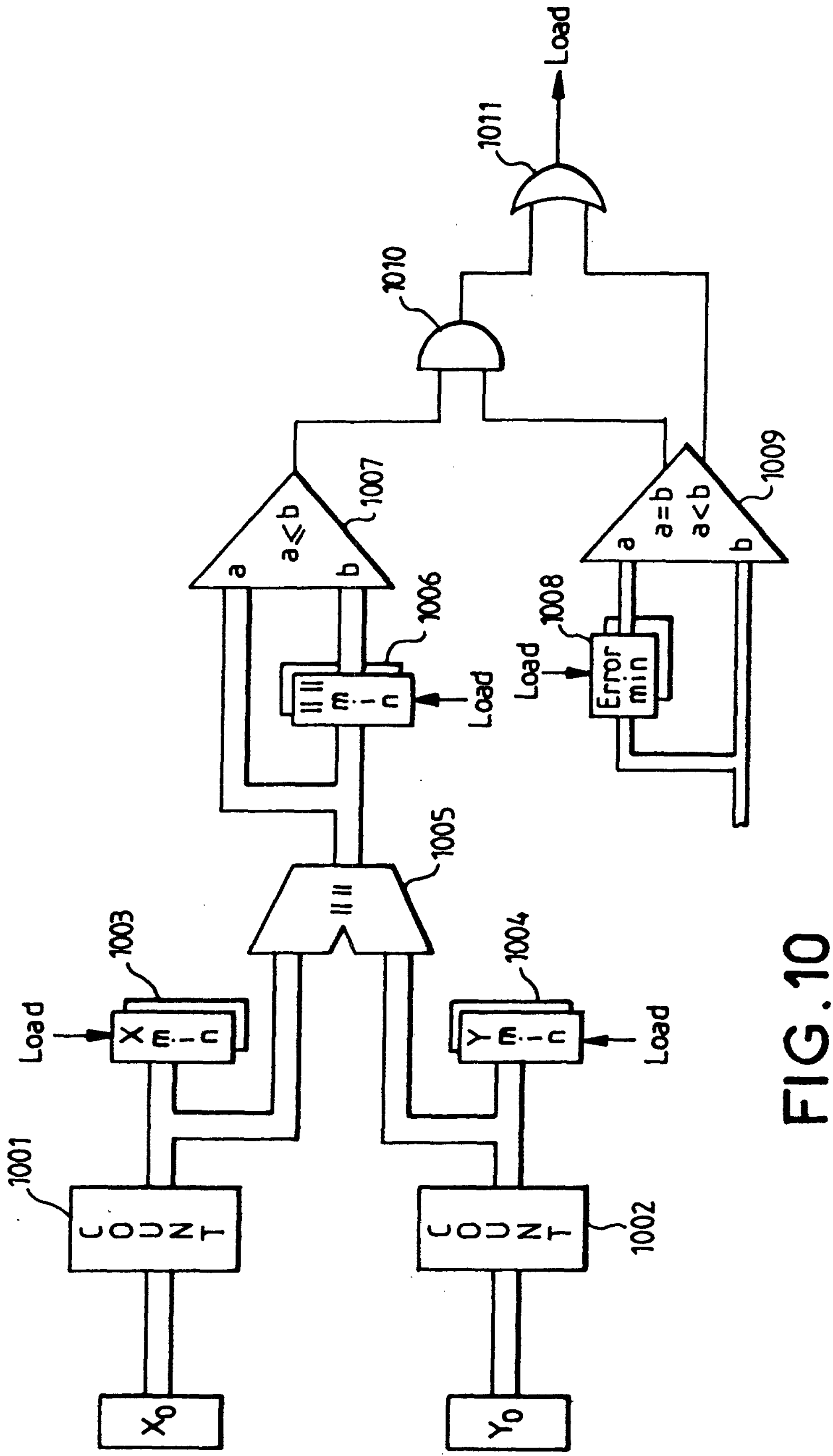
Load
1011
1010
1007
a
a≤b
b
1009
a
a=b
a<b
b
1006
min
Load
1008
Load
Error
min
1005
1003
Load
X min
1004
Y min
Load
1001
COUNT
1002
COUNT
$X_0$
$Y_0$

FIG. 10